# EUROPÄISCHE PATENTSCHRIFT

(11) **EP 2 496 851 B1**
(45) Veröffentlichungstag und Bekanntmachung des Hinweises auf die Patenterteilung: **15.10.2014**
(21) Anmeldenummer: 10776654.5
(22) Anmeldetag: 04.11.2010
(51) Int. Cl.: F16C 23/06

(54) **RADIAL EINSTELLBARE WELLENLAGERANORDNUNG**
RADIALLY ADJUSTABLE SHAFT BEARING ARRANGEMENT
DISPOSITIF DE PALIER D'ARBRE AJUSTABLE À DIRECTION RADIAL

(30) Priorität: 07.11.2009 DE 102009052352
(43) Veröffentlichungstag der Anmeldung: 12.09.2012
(73) Patentinhaber: Siemens Aktiengesellschaft, 80333 München (DE)
(72) Erfinder: BOEING, Georg, 72108 Rottenburg (DE); SCHNURR, Wolfgang, 72147 Nehren (DE)
(86) Internationale Anmeldenummer: PCT/EP2010/066794
(87) Internationale Veröffentlichungsnummer: WO 2011/054898

(56) Entgegenhaltungen:
- DE-C1- 10 116 290
- JP-A- 8 021 517
- JP-A- 2004 301 265

## Beschreibung

Die Erfindung betrifft eine Wellenlageranordnung mit einem Maschinenteil in dem eine Welle an zwei axial beabstandeten Lagerstellen drehbar gelagert ist.

Eine derartige Wellenlageranordnung ist beispielsweise aus der EP 1 098 097 Al bekannt. Die bekannte Wellenlageranordnung umfaßt eine Lagerbuchse und ein Maschinenteil zur Aufnahme der Lagerbuchse. Die Lagerbuchse weist eine äußere Mantelfläche eine zu der Mantelfläche exzentrisch angeordnete Innenbohrung sowie einen die Mantelfläche überragenden Flansch auf. In dem Flansch sind auf einem zur Mantelfläche konzentrischen Kreis Bohrungen zur Aufnahme von Befestigungsschrauben angeordnet, die in Bohrungen eingreifen, die auf einem gleich großen Kreis in dem Maschinenteil angebracht sind. Die Exzentrizität der Innenbohrung der Lagerbuchse ist wenigstens in einer Ebene gegenüber der Mantelfläche der Lagerbuchse oder gegenüber dem zwei senkrecht zueinander stehende Symmetrieebenen aufweisenden Kreis der Bohrungen im Maschinenteil asymmetrisch. Der Mittelpunkt der Innenbohrung liegt außerhalb der beiden Symmetrieachsen der Mantelfläche oder des Kreises der Bohrungen.

Ziel dieser Anordnung ist es, die Drehachse einer Welle verstellen zu können, so daß beispielsweise das Zahnflankenspiel zwischen zwei Zahnrädern verstellt werden kann. Diese Verstellung ist mit der bekannten Anordnung jedoch nur stufenweise möglich. Außerdem ist vorgesehen, die Drehachse der Welle lediglich parallel zu verlagern, so daß an beiden Lagerstellen der Welle eine Verstellung erfolgen muß.

Eine ähnliche Wellenlageranordnung, bei der Befestigungsschrauben mit Verstellspiel in Öffnungen angeordnet sind, ist auch aus JP 8-21517 A bekannt.

Aus CH 135 292 A, CN 2899597 Y und JP 2004 301 265 A ist jeweils eine Wellenlageranordnung bekannt, bei der eine mit einem Zahnrad verbundene Welle an zwei axial beabstandeten Lagerstellen drehbar gelagert ist. Dabei ist eine erste Lagerstelle ortsfest angeordnet, während die zweite Lagerstelle relativ zur ersten Lagerstelle parallel zu einer gemeinsamen Wellenlagerebene verschiebbar ist. Durch ein paralleles Verschieben der zweiten Lagerstelle kann die Welle um eine Drehachse im Bereich der ersten Lagerstelle geschwenkt werden. Hierdurch kann ein Zahnflankenspiel zwischen dem mit der Welle verbundenen Zahnrad und einem weiteren Zahnrad eingestellt werden.

Aufgabe der vorliegenden Erfindung ist es demgegenüber, eine Wellenlageranordnung bereitzustellen, die einfach und kostengünstig aufgebaut ist und mit der eine einfache Verstellung der Drehachse einer Welle ermöglicht wird.

Gelöst wird diese Aufgabe erfindungsgemäß durch eine Wellenlageranordnung der eingangs genannten Art, wobei eine erste Lagerstelle ortsfest angeordnet ist und eine zweite Lagerstelle relativ zur ersten Lagerstelle derart verstellbar ist, daß eine Verstellung der zweiten Lagerstelle ein Verschwenken der Welle um eine Drehachse im Bereich der ersten Lagerstelle bewirkt. Hierbei wird ausgenutzt, daß Hersteller von Lagern, insbesondere Wälzlagern, die Lager so ausbilden, daß eine gewisse Schrägstellung der Welle im Wellenlager erlaubt wird. Dies liegt darin begründet, daß sich Wellen im Gebrauch häufig durchbiegen. Die Hersteller von Wellenlagern lassen dies bewußt zu. Es ergibt sich dadurch eine ballige Pressungsverteilung im Lager, die erfindungsgemäß ausgenutzt werden kann, siehe z. B. FAG Wälzlager, Katalog WL 41 520/3DB, Ausgabe 1999, Seite 323.

Wenn die Welle Bestandteil eines Getriebes ist, also beispielsweise als Schneckenwelle, Schneckenrad, Stirnrad oder Ritzelwelle ausgebildet ist bzw. ein derartiges Bauteil aufweist, kann durch die Verstellung der Welle die Lage bezüglich des jeweils anderen Getriebeteils und damit das Zahnflankenspiel eingestellt werden. Beispielsweise kann die Welle in einer Schiefstellung montiert werden und anschließend das Zahnflankenspiel so eingestellt werden, daß sich die Welle im Gebrauchszustand in einer geraden Einbaulage im Maschinenteil, z. B. parallel zu einer Mittenebene des Maschinenteils befindet. Durch die erfindungsgemäße Wellenlageranordnung ist eine Verstellung der Drehachse der Welle deutlich einfacher möglich als in einer bekannten Wellenlageranordnung, da nur noch eine Lagerstelle verstellt werden muß. Dadurch verringert sich auch der konstruktive Aufwand der Wellenlageranordnung.

Besondere Vorteile ergeben sich, wenn die zweite Lagerstelle stufenlos verstellbar ist. Dadurch ist das Zahnflankenspiel besonders genau einstellbar.

Gemäß einer Erfindungsbauart kann an der ersten Lagerstelle ein Wellenlager vorgesehen sein, das parallel zu einer Wellenlagerebene ausgerichtet ist und an der zweiten Lagerstelle kann ein Wellenlager vorgesehen sein, das ebenfalls parallel zur Wellenlagerebene ausgerichtet ist und parallel zur Wellenlagerebene verstellbar ist. Dies bedeutet, daß das Wellenlager an der zweiten Lagerstelle lediglich eine translatorische Bewegung ausführen muß, um eine Verstellung der Welle zu bewirken. Insbesondere kann es ausreichend sein, wenn das Wellenlager an der zweiten Lagerstelle ausschließlich eine Bewegung in einer Richtung ausführt.

Die erste Lagerstelle ist erfindungsgemäß in oder an einem ersten Maschinenteilelement angeordnet, und die zweite Lagerstelle ist in oder an einem zweiten Maschinenteilelement angeordnet, wobei das zweite Maschinenteilelement relativ zum ersten Maschinenteilelement verstellbar ist. Besondere Vorteile ergeben sich, wenn das zweite Maschinenteilelement entlang einer Führung relativ zum ersten Maschinenteilelement verstellbar ist. Durch diese Maßnahme ergibt sich eine definierte Verstellmöglichkeit des zweiten Maschinenteilelements und dadurch der zweiten Lagerstelle bezüglich des ersten Maschinenteilelements bzw. der ersten Lagerstelle. Die Führung kann beispielsweise dadurch ausgebildet werden, daß an dem zweiten Maschinenteilelement Langlöcher vorgesehen sind, die durch Befestigungsschrauben durchragt sind, die in das erste Maschinenteilelement eingeschraubt sind. Zur Verstellung des zweiten Maschinenteilelements ist es daher lediglich erforderlich, die Befestigungsschrauben etwas zu lösen. Anschließend kann das zweite Maschinenteilelement in dem durch die Langlöcher definierten Verstellbereich relativ zu den Befestigungsschrauben bewegt werden. Wenn die richtige Verstellposition eingenommen wird, können die Befestigungsschrauben wieder angezogen werden und kann dadurch das zweite Maschinenteilelement in seiner verstellten Lage bezüglich des ersten Maschinenteilelements festgelegt werden. Dabei besteht der Vorteil, daß die Befestigungsschrauben nicht entfernt werden müssen, wie dies im Stand der Technik nötig ist, um eine Verstellung der Lagerbuchse zu bewirken. Es sind jedoch auch andere Arten der Führung denkbar. Es könnte am ersten Maschinenteilelement eine Führung, beispielsweise eine Leiste oder eine Ausnehmung, vorgesehen sein, entlang der das zweite Maschinenteilelement verstellbar ist.

Das zweite Maschinenteilelement ist erfindungsgemäß entgegen einer Rückstellkraft relativ zum ersten Maschinenteilelement verstellbar. Durch entsprechende Anordnung von elastischen Mitteln, die die Rückstellkraft bewirken, kann sichergestellt werden, daß das zweite Maschinenteilelement nur in einer vorgegebenen Richtung bewegbar ist.

Weiterhin können Ausrichtmittel zum Ausrichten des zweiten Maschinenteilelements bezüglich des ersten Maschinenteilelements vorgesehen sein. Durch die Ausrichtmittel kann sichergestellt werden, daß das zweite Maschinenteil nur in einer Richtung bewegt wird. Eine Bewegung in andere Richtungen sollte vermieden werden. Dazu können die Ausrichtmittel unterstützend wirken. Wenn das zweite Maschinenteilelement in einer Öffnung des ersten Maschinenteilelements angeordnet ist, können mehrere Federelemente, Gummipuffer oder dergleichen über den Umfang des zweiten Maschinenteilelements verteilt zwischen den Maschinenteilelementen angeordnet sein und dadurch zentrierend wirken.

Gemäß einer Ausführungsform kann das Maschinenteil als Gehäuse ausgebildet sein und können zwischen dem ersten Maschinenteilelement und dem zweiten Maschinenteilelement Abdichtmittel vorgesehen sein. Dadurch kann vermieden werden, daß Schmutz in das Gehäuse eindringt und den zuverlässigen Betrieb der Wellenlageranordnung behindert. Außerdem kann verhindert werden, daß Schmierstoffe, die sich im Gehäuse befinden, nach außen treten können.

Zwischen dem ersten Maschinenteilelement und dem zweiten Maschinenteilelement kann ein O-Ring angeordnet sein. Dabei kann das zweite Maschinenteilelement zumindest teilweise in einer Öffnung des ersten Maschinenteilelements angeordnet sein, und der O-Ring kann zwischen den beiden Maschinenteilelementen angeordnet sein. Wird nun das zweite Maschinenteilelement relativ zum ersten Maschinenteilelement verstellt, so wird der O-Ring gestaucht. Es entstehen Radialkräfte. Durch das Stauchen des O-Rings entsteht auch eine Rückstellkraft, gegen die das zweite Maschinenteilelement bewegt wird. Die Radialkräfte bilden ein Kräftegleichgewicht aus und zentrieren dadurch das zweite Maschinenteilelement im ersten Maschinenteilelement. Verschiebt man das zweite Maschinenteilelement aus dieser zentrierten Stellung, so erzielt man eine Achsschiefstellung der Achse der Welle. Ist die Kraft, welche benötigt wird, um das zweite Maschinenteilelement zu bewegen, in Richtung Symmetrieachse gerichtet, so wird das zweite Maschinenteilelement nur in diese Richtung ausweichen, da in orthogonaler Richtung zur aufgebrachten Kraft die Kräfte im Gleichgewicht sind bzw. dieses erzwingen. Der O-Ring wirkt weiterhin abdichtend zwischen dem ersten Maschinenteilelement und dem zweiten Maschinenteilelement. Somit können durch einen O-Ring mehrere Funktionen abgedeckt werden. Bei dieser Ausgestaltung der Wellenlageranordnung bestehen nur geringe Anforderungen an die Fertigungsgenauigkeit des zweiten Maschinenteilelements. Der O-Ring kann Toleranzen ausgleichen.

Besonders vorteilhaft ist es, wenn Verstellmittel zum Verstellen des zweiten Maschinenteilelements relativ zum ersten Maschinenteilelement vorgesehen sind. Durch die Verstellmittel kann eine definierte Verstellung des zweiten Maschinenteils bewirkt werden. Beispielsweise können die Verstellmittel einen Exzenter umfassen. Eine Schraube, die in das erste Maschinenteilelement eingeschraubt ist, kann einen exzentrischen Schraubenkopf aufweisen, der in einer Öffnung des zweiten Maschinenteilelements angeordnet ist. Eine Verdrehung des Schraubenkopfes bewirkt somit eine Verlagerung des zweiten Maschinenteilelements relativ zum ersten Mäschinenteilelement.

Das zweite Wellenlagerteil umfaßt erfindungsgemäß mehrere Öffnungen, durch die in das erste Maschinenteilelement eingeschraubte Befestigungsschrauben ragen, wobei die Befestigungsschrauben mit Verstellspiel in den Öffnungen angeordnet sind. Das Verstellspiel kann im Bereich 2/10 bis 5/10 mm liegen. Zum Verstellen des zweiten Maschinenteilelements können die Befestigungsschrauben etwas gelöst werden, so daß das zweite Maschinenteilelement relativ zu den Befestigungsschrauben im Rahmen des Verstellspiels bewegt werden kann. Nun wird die neue Position des zweiten Maschinenteilelements eingestellt und anschließend werden die Befestigungsschrauben wieder eingeschraubt, um das zweite Maschinenteilelement am ersten Maschinenteilelement ortsfest zu fixieren. Diese Ausgestaltung der Wellenlageranordnung hat den Vorteil, daß ein Nachstellen der Position der zweiten Lagerstelle ohne Demontage der gesamten Wellenlageranordnung möglich ist. Außerdem besteht eine geringe Wahrscheinlichkeit von Montagefehlern im Vergleich zu Anordnungen des Standes der Technik.

Montagefehler können auch dadurch verringert werden, daß die Öffnungen auf einem Kreis liegen.

Besonders vorteilhaft ist es, wenn die Welle als Getriebeteil ausgebildet ist oder ein solches aufweist und in dem Maschinenteil ein zugeordnetes zweites Getriebeteil angeordnet ist. Bei einer solchen Anordnung kann durch eine Verstellung der Schrägstellung der Welle das Zahnflankenspiel eines Getriebes besonders einfach und stufenlos eingestellt werden.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, daß die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung in verschiedenen Stadien der Benutzung dargestellt und in der nachfolgenden Beschreibung näher erläutert. Es zeigen
- Figur 1a: eine Schnittdarstellung durch eine Wellenlageranordnung, bei der sich die Welle in einer Montagestellung befindet,
- Figur 1b: eine Querschnittsdarstellung entlang der Linie Ib-Ib der Figur 1a,
- Figur 2a-b: den Darstellungen der Figuren 1a und 1b entsprechende Darstellungen für eine Zieleinstellung der Welle,
- Figur 3a-b: den Figuren 1a und 1b entsprechende Darstellungen für eine spielfreie Einstellung der Welle,
- Figur 4a: eine Seitenansicht einer ersten Ausführungsform einer Wellenanordnung,
- Figur 4b: eine Schnittdarstellung durch ein zweites Maschinenteilelement der Wellenanordnung gemäß Figur 4a,
- Figur 4c: einen Horizontalschnitt durch eine erste Ausführungsform einer Wellenlageranordnung,
- Figur 5a-c: den Figuren 4a bis 4c entsprechende Darstellungen für eine zweite Ausführungsform einer Wellenlageranordnung,
- Figur 6a-c: den Figuren 4a bis 4c entsprechende Darstellungen für eine dritte Ausführungsform einer Wellenlageranordnung.

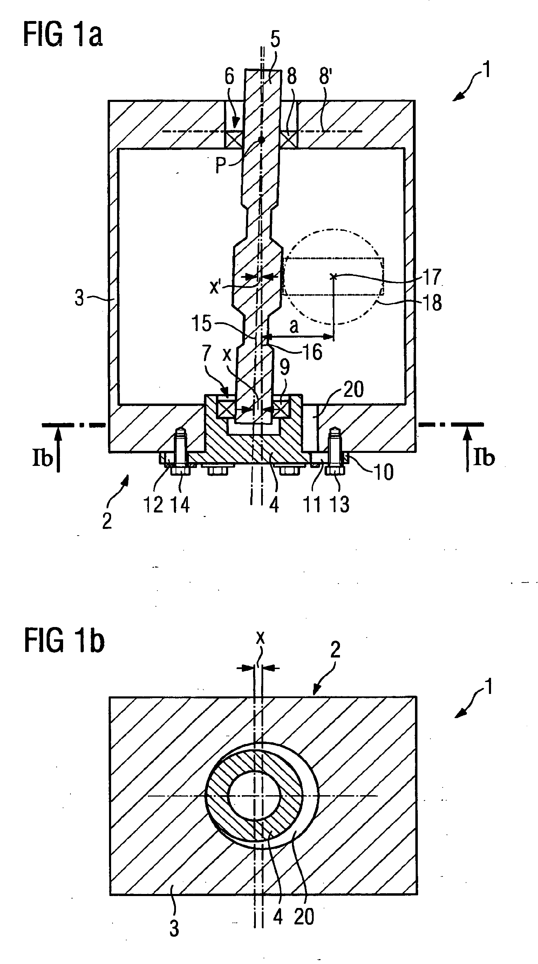

Figur 1a zeigt eine Wellenlageranordnung 1 mit einem Maschinenteil 2, welches ein erstes Maschinenteilelement 3 und ein zweites Maschinenteilelement 4 umfaßt. Im Ausführungsbeispiel ist das Maschinenteil 2 als Gehäuse ausgebildet, welches sich aus den Maschinenteilelementen 3, 4 zusammensetzt. In dem Maschinenteil 2 ist eine Welle 5 an zwei Lagerstellen 6, 7 gelagert. Die erste Lagerstelle 6 ist ortsfest angeordnet und umfaßt ein Wellenlager 8, welches parallel zu einer Wellenlagerebene 8' ausgerichtet ist. Die zweite Lagerstelle 7 ist in dem zweiten Maschinenteilelement 4 angeordnet und umfaßt ein Wellenlager 9, welches ebenfalls parallel zur Wellenlagerebene 8' ausgerichtet ist.

Das zweite Maschinenteilelement 4 weist einen Flansch 10 auf, in dem sich Öffnungen 11, 12 befinden. Durch die Öffnungen 11, 12 ragen Befestigungsschrauben 13, 14, die in das erste Maschinenteilelement 3 eingeschraubt sind. Die Öffnungen 11, 12 sind deutlich größer als der Durchmesser der Befestigungsschrauben 13, 14, es liegt also ein Verstellspiel vor. Dies bedeutet, daß bei gelösten Befestigungsschrauben 13, 14 das zweite Maschinenteilelement 4 relativ zu den Befestigungsschrauben 13, 14 und somit auch relativ zum ersten Maschinenteilelement 3 stufenlos verstellbar ist. In der gezeigten Stellung befindet sich das zweite Maschinenteilelement 4 in einer linken Endstellung. Dies bedeutet, daß die Welle 5 eine Schrägstellung aufweist. Insbesondere ist die Rotationsachse 15 bezüglich einer Mittenachse 16 bzw. Mittenebene der Wellenlageranordnung 1 schräg gestellt. Diese Schrägstellung ergibt sich, da das zweite Maschinenteilelement 4 um die Strecke x gegenüber einer zentrierten Stellung parallel zur Wellenlagerebene 8' nach links verlagert wurde. Dadurch ergibt sich eine Achsabstandsveränderung x'. Der Abstand der Drehachse 15 von einer Drehachse 17 beträgt daher a + x'. Die Drehachse 17 ist einem zweiten Getriebeteil 18 zugeordnet, welches beispielsweise als Schnecken- oder Stirnrad ausgebildet sein kann. Die Welle 5 kann entsprechend als Schnecken- oder Ritzelwelle ausgebildet sein.

In der Schnittdarstellung der Figur 1b ist zu erkennen, daß das zweite Maschinenteilelement 4 innerhalb der Öffnung 20 des ersten Maschinenteilelements 3 in einer linken Endstellung angeordnet ist, was sich.durch eine Verlagerung um die Strecke x aus einer zentrierten Position ergeben hat.

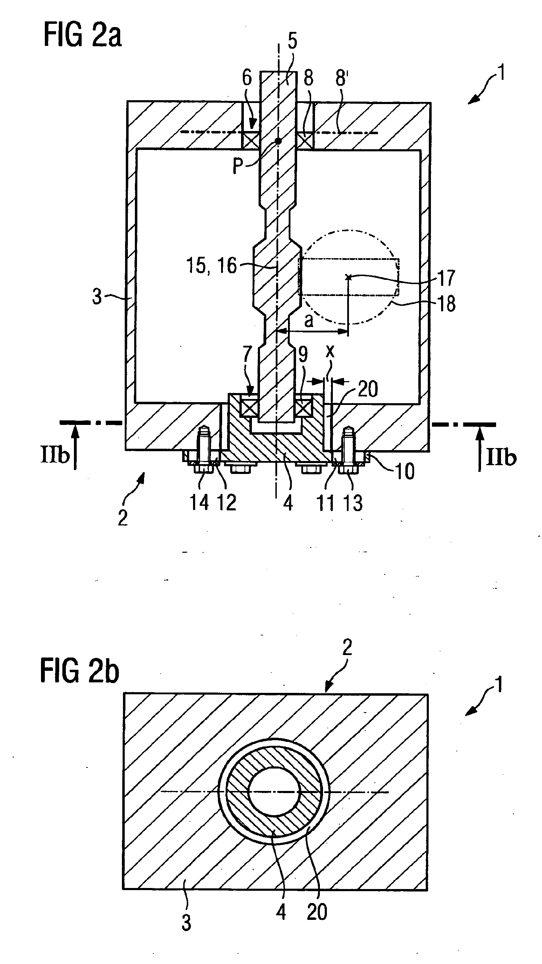

Figur 2a zeigt eine Figur 1a entsprechende Darstellung. Für dieselben Bauteile sind dieselben Bezugszeichen verwendet. Gegenüber der Darstellung der Figur 1a befindet sich das zweite Maschinenteilelement 4 in einer zentrierten Stellung innerhalb der Öffnung 20. Dies hat zur Folge, daß die Drehachse 15 und die Mittenachse 16 nun deckungsgleich sind, da die Welle 5 um die Drehachse P, die senkrecht zur Rotationsachse 15 steht, verschwenkt wurde. Die Welle 5 befindet sich in einer Zieleinstellung, in der der Abstand zwischen den Achsen 15, 17 a beträgt. Das zweite Maschinenteil 4 weist allseitig den Abstand x zur Berandung der Öffnung 20 auf. Dies ist auch aus Figur 2b ersichtlich.

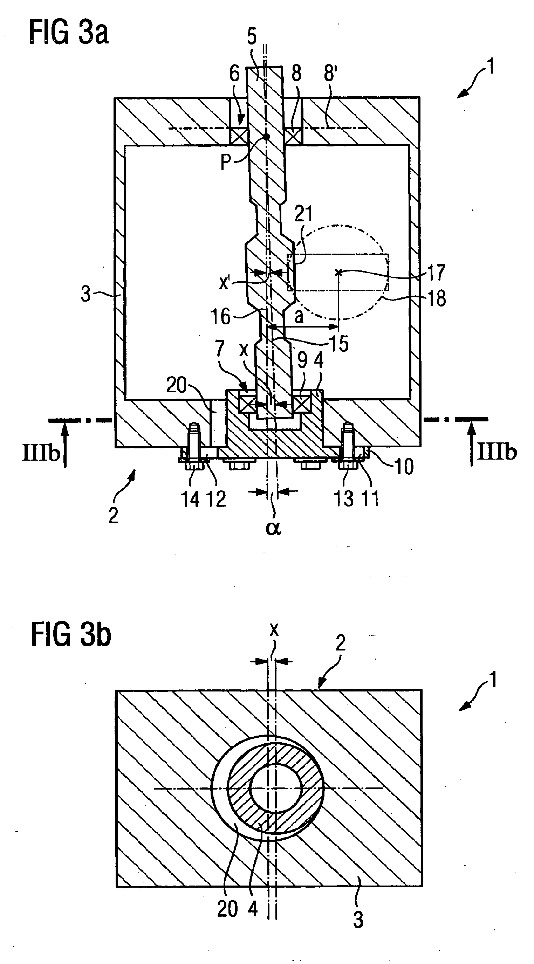

In Figur 3a befindet sich das zweite Maschinenteilelement 4 in einer rechten Endlage. Insbesondere wurde das Maschinenteilelement 4 gegenüber der Stellung der Figur 2a um die Strecke x nach rechts bewegt. Die Drehachse der Welle 5 befindet sich nun im Abstand a-x' zur Drehachse 17 des Getriebeteils 18. Das Getriebeteil 18 steht nun in Eingriff mit einem entsprechenden Abschnitt 21 der Welle 5, wobei das Zahnflankenspiel minimiert wurde, da die Eingriffstiefe der Zähne verändert wurde. Die Welle 5 wurde also, um von der Stellung gemäß Figur 1a in die Stellung gemäß Figur 3a zu gelangen, um die Drehachse P im Bereich der Lagerstelle 6 verschwenkt, indem lediglich das zweite Maschinenteilelement 4 mit der Lagerstelle 7 transversal parallel zur Wellenlagerebene 8' verstellt wurde. Diese Verstellung erfolgt stufenlos. In der in Figur 3a gezeigten Stellung ist die Welle 5 und damit ihre Rotationsachse 15 um den Winkel α gegenüber der Mittenachse 16 des Maschinenteils 2 verschwenkt.

Figur 3b zeigt in einer den Figuren 1b und 2b entsprechenden Darstellung die Position des zweiten Maschinenteilelements 4 bezüglich des ersten Maschinenteilelements 3.

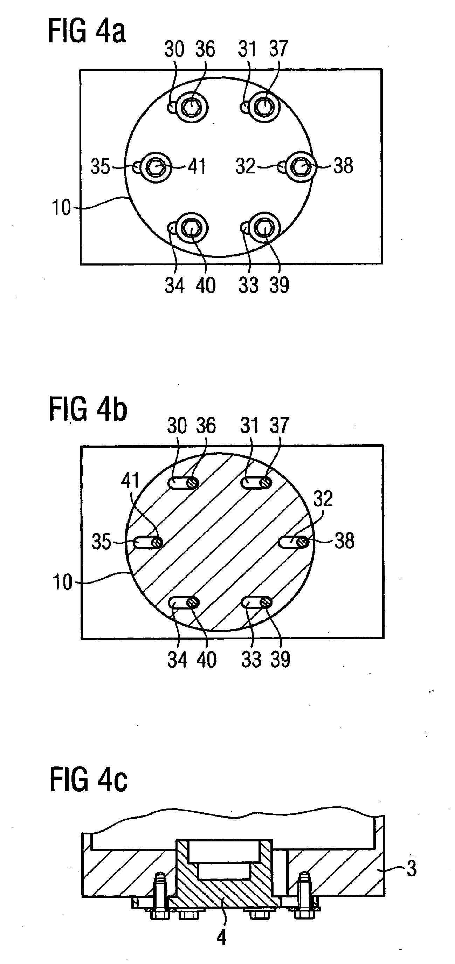

Die Figuren 4a bis 4c zeigen, daß in einer ersten Ausführungsform der Flansch 10 des zweiten Maschinenteilelements 4 Langlöcher 30-35 aufweist. Befestigungsschrauben 36-41 durchdringen die Langlöcher 30-35 und sind mit dem ersten Maschinenteilelement 3 verschraubt. Die Langlöcher 30-35 stellen eine Führung dar, entlang der das zweite Maschinenteilelement 4 bezüglich des ersten Maschinenteilelements 3 verstellt werden kann. Aufgrund der Ausgestaltung als Langlöcher 30-35 ist nur eine Bewegung in einer Richtung möglich.

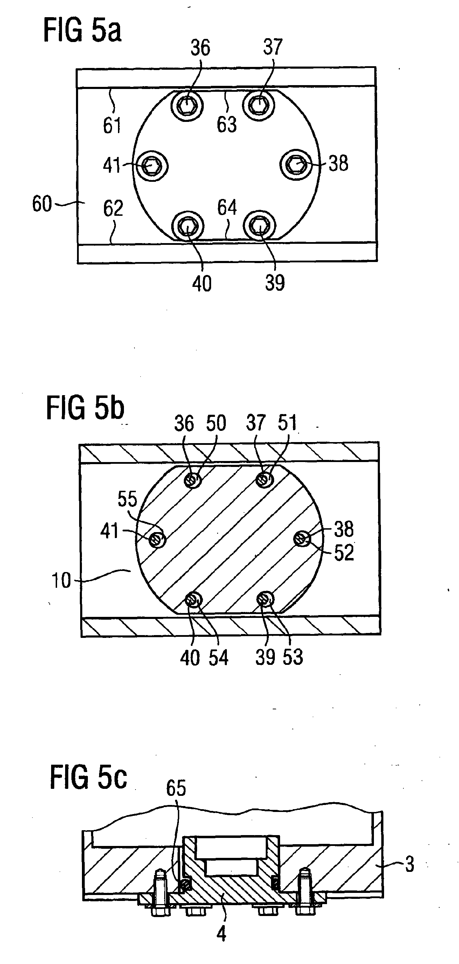

Bei der Ausgestaltung gemäß den Figuren 5a bis 5c sind die Löcher 50-55 kreisrund ausgebildet und weisen einen Abstand (Verstellspiel) zu den Befestigungsschrauben 36-41 auf. Hier ist zu erkennen, daß das erste Maschinenteilelement 3 eine als Ausfräsung ausgebildete Ausnehmung 60 aufweist, die durch Ränder 61, 62 begrenzt wird. Das zweite Maschinenteilelement 4 ist nicht mehr kreisrund ausgebildet, sondern weist den Rändern 61, 62 gegenüberliegend flache Abschnitte 63, 64 auf. Das Maschinenteilelement 4 kann daher ebenfalls nur in einer Richtung bewegt werden, da es durch die Ränder 61, 62 geführt wird und die Ränder 61, 62 eine vertikale Bewegung verhindern. Es ist somit nur eine horizontale Bewegung möglich. Der Figur 5c kann man entnehmen, daß zwischen dem Maschinenteilelement 4 und dem Maschinenteilelement 3 ein O-Ring 65 angeordnet ist, der auf der rechten Seite aufgrund der Verlagerung des zweiten Maschinenteilelements 4 nach rechts gequetscht ist. Dadurch erfolgt die Verstellung entgegen einer Rückstellkraft. Durch den O-Ring 65 erfolgt eine Abdichtung der beiden Maschinenteilelemente 3, 4 gegeneinander. Außerdem wird durch ihn eine automatische Zentrierung bewirkt, wenn das Maschinenteilelement 4 nicht durch Aufwendung zusätzlicher externer Kräfte verstellt wird.

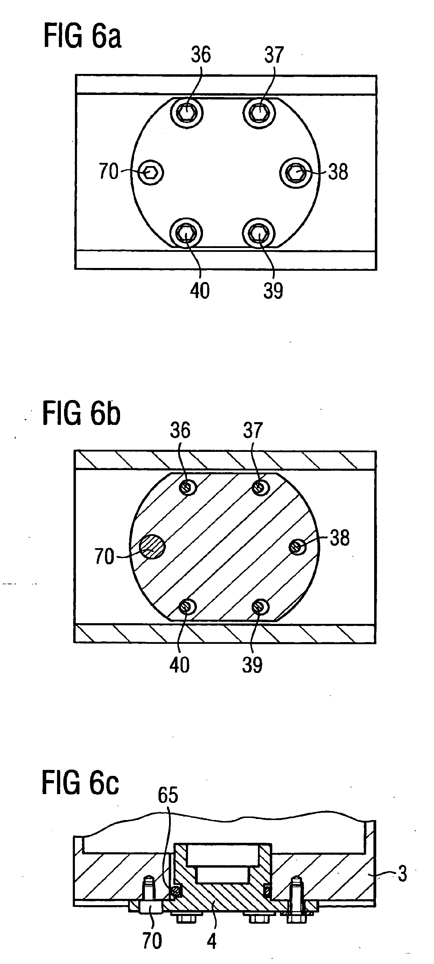

Die Besonderheit der Ausgestaltung gemäß den Figuren 6a bis 6c besteht darin, daß die Befestigungsschraube 41 der zweiten Ausführungsform gemäß der Figur 5b durch eine Exzenterschraube 70 ersetzt ist. Die Exzenterschraube 70 kann verwendet werden, um das Maschinenteilelement 4 bezüglich des Maschinenteilelements 3 zu verstellen. Es sind somit keine externen Verstellmittel nötig.

Auch in der Ausführungsform gemäß den Figuren 6a bis 6c ist eine Ausnehmung 60 vorhanden, so daß auch das Maschinenteilelement 4 gemäß der Figuren 6a bis 6c durch die Ränder 61, 62 geführt ist. Somit ist ebenfalls eine Verstellung des Maschinenteilelements 4 lediglich in horizontaler Richtung möglich.

## Patentansprüche

1. Wellenlageranordnung (1) mit
- einem Maschinenteil (2), in dem eine Welle (5) an zwei axial beabstandeten Lagerstellen (6, 7) drehbar gelagert ist,
von denen eine erste Lagerstelle (6) ortsfest angeordnet ist und die zweite Lagerstelle (7) relativ zur ersten Lagerstelle (6) derart verstellbar ist,
daß eine Verstellung der zweiten Lagerstelle (7) ein Verschwenken der Welle (5) um eine Drehachse (P) im Bereich der ersten Lagerstelle (6) bewirkt,
**dadurch gekennzeichnet, daß**
- die erste Lagerstelle (6) in oder an einem ersten Maschinenteilelement (3) angeordnet ist und die zweite Lagerstelle (7) in oder an einem zweiten Maschinenteilelement (4) angeordnet ist, wobei das zweite Maschinenteilelement (4) relativ zum ersten Maschinenteilelement (3) verstellbar ist,
- das zweite Maschinenteilelement (4) entgegen einer Rückstellkraft relativ zum ersten Maschinenteilelement (3) verstellbar ist,
- das zweite Maschinenteilelement (4) mehrere Öffnungen (11, 12, 30-35, 50-55) umfaßt, durch die in das erste Maschinenteilelement (3) eingeschraubte Befestigungsschrauben (13, 14, 36-41) ragen, wobei die Befestigungsschrauben mit Verstellspiel in den Öffnungen (11, 12, 30-35, 50-55) angeordnet sind.

2. Wellenlageranordnung nach Anspruch 1, **dadurch gekennzeichnet, daß** die zweite Lagerstelle (7) stufenlos verstellbar ist.

3. Wellenlageranordnung nach einem der vorhergehenden Ansprüche, **dadurch gekennzeichnet, daß** an der ersten Lagerstelle (6) ein Wellenlager (8) vorgesehen ist, das parallel zu einer Wellenlagerebene (8') ausgerichtet ist und an der zweiten Lagerstelle (7) ein Wellenlager (9) vorgesehen ist, das ebenfalls parallel zur Wellenlagerebene (8') ausgerichtet ist und parallel zur Wellenlagerebene (8') verstellbar ist.

4. Wellenlageranordnung nach einem der vorhergehenden Ansprüche, **dadurch gekennzeichnet, daß** das zweite Maschinenteilelement (4) entlang einer Führung relativ zum ersten Maschinenteilelement (3) verstellbar ist.

5. Wellenlageranordnung nach einem der vorhergehenden Ansprüche, **dadurch gekennzeichnet, daß** Ausrichtmittel zum Ausrichten des zweiten Maschinenteilelements (4) bezüglich des ersten Maschinenteilelements (3) vorgesehen sind.

6. Wellenlageranordnung nach einem der vorhergehenden Ansprüche, **dadurch gekennzeichnet, daß** das Maschinenteil (2) als Gehäuse ausgebildet ist und zwischen dem ersten Maschinenteilelement (3) und dem zweiten Maschinenteilelement (4) Abdichtmittel vorgesehen sind.

7. Wellenlageranordnung nach einem der vorhergehenden Ansprüche, **dadurch gekennzeichnet, daß** zwischen dem ersten Maschinenteilelement (3) und dem zweiten Maschinenteilelement (4) ein O-Ring (65) angeordnet ist.

8. Wellenlageranordnung nach einem der vorhergehenden Ansprüche, **dadurch gekennzeichnet, daß** Verstellmittel (70) zum Verstellen des zweiten Maschinenteilelements (4) relativ zum ersten Maschinenteilelement (3) vorgesehen sind.

9. Wellenlageranordnung nach einem der vorhergehenden Ansprüche, **dadurch gekennzeichnet, daß** die Verstellmittel (70) einen Exzenter umfassen.

10. Wellenlageranordnung nach einem der vorhergehenden Ansprüche, **dadurch gekennzeichnet, daß** die Öffnungen (11, 12, 30-35, 50-55) auf einem Kreis liegen.

11. Wellenlageranordnung nach einem der vorhergehenden Ansprüche, **dadurch gekennzeichnet, daß** die Welle (5) als Getriebeteil ausgebildet ist oder ein solches aufweist und in dem Maschinenteil (2) ein zugeordnetes zweites Getriebeteil (18) angeordnet ist.

## Claims

1. Shaft bearing assembly (1) having
- a machine part (2) in which a shaft (5) is rotatably mounted at two axially spaced-apart bearing points (6, 7),
a first bearing point (6) of which is arranged so as to remain fixed and the second bearing point (7) can be adjusted relative to the first bearing point (6) in such a way that an adjustment of the second bearing point (7) causes the shaft (5) to pivot about an axis of rotation (P) in the region of the first bearing point (6),
**characterised in that**
- the first bearing point (6) is arranged in or on a first machine part element (3) and the second bearing point (7) is arranged in or on a second machine part element (4), the second machine part element (4) being displaceable relative to the first machine part element (3),
- the second machine part element (4) can be displaced relative to the first machine part element (3) against a restoring force,
- the second machine part element (4) includes a plurality of openings (11, 12, 30-35, 50-55) through which fixing bolts (13, 14, 36-41) screwed into the first machine part element (3) project, the fixing bolts being arranged with adjustment play in the openings (11, 12, 30-35, 50-55).

2. Shaft bearing assembly according to claim 1, **characterised in that** the second bearing point (7) is continuously adjustable.

3. Shaft bearing assembly according to one of the preceding claims, **characterised in that** a shaft bearing (8) which is aligned parallel to a shaft bearing plane (8') is provided at the first bearing point (6) and a shaft bearing (9) which is likewise aligned parallel to the shaft bearing plane (8') and can be displaced parallel to the shaft bearing plane (8') is provided at the second bearing point (7).

4. Shaft bearing assembly according to one of the preceding claims, **characterised in that** the second machine part element (4) can be displaced relative to the first machine part element (3) along a guidance means.

5. Shaft bearing assembly according to one of the preceding claims, **characterised in that** alignment means are provided for aligning the second machine part element (4) in relation to the first machine part element (3).

6. The shaft bearing assembly according to one of the preceding claims, **characterised in that** the machine part (2) is embodied as a housing and sealing means are provided between the first machine part element (3) and the second machine part element (4).

7. Shaft bearing assembly according to one of the preceding claims, **characterised in that** an O-ring (65) is arranged between the first machine part element (3) and the second machine part element (4).

8. Shaft bearing assembly according to one of the preceding claims, **characterised in that** displacement means (70) are provided for displacing the second machine part element (4) relative to the first machine part element (3).

9. Shaft bearing assembly according to one of the preceding claims, **characterised in that** the displacement means (70) include an eccentric.

10. Shaft bearing assembly according to one of the preceding claims, **characterised in that** the openings (11, 12, 30-35, 50-55) lie on a circle.

11. Shaft bearing assembly according to one of the preceding claims, **characterised in that** the shaft (5) is embodied as a gear part or includes such a gear part and **in that** an associated second gear part (18) is arranged in the machine part (2).

## Revendications

1. Agencement (1) de palier d'arbre, comprenant
- une partie (2) de machine, dans laquelle un arbre (5) est monté tournant sur deux points (6, 7) d'appui à distance axialement,
dont un premier point (6) d'appui est monté à poste fixe, tandis que le deuxième point (7) d'appui peut être déplacé par rapport au premier point (6) d'appui, de manière à ce qu'un déplacement du deuxième point (7) d'appui provoque un pivotement de l'arbre (5) autour d'un axe (P) de rotation dans la région du premier point (6) d'appui,
**caractérisé en ce que**
- le premier point (6) d'appui est monté dans ou sur un premier sous-élément (3) de machine et le deuxième point (7) d'appui est monté dans ou sur un deuxième sous-élément (4) de machine, le deuxième sous-élément (4) de machine pouvant être déplacé par rapport au premier sous-élément (3) de machine,
- le deuxième sous-élément (4) de machine peut être déplacé à l'encontre d'une force de rappel par rapport au premier sous-élément (3) de machine,
- le deuxième sous-élément (4) de machine comprend plusieurs ouvertures (11, 12, 30 à 35, 50 à 55), dans lesquelles pénètrent des vis (13, 14, 36 à 41) de fixation vissées dans le premier sous-élément (3) de machine, les vis de fixation étant disposées avec jeu de réglage dans les ouvertures (11, 12, 30 à 35, 50 à 55).

2. Agencement de palier d'arbre suivant la revendication 1, **caractérisé en ce que** le deuxième point (7) d'appui peut être déplacé progressivement.

3. Agencement de palier d'arbre suivant l'une des revendications précédentes, **caractérisé en ce qu'**il est prévu, sur le premier point (6) d'appui, un palier (8) d'arbre, qui est dirigé parallèlement à un plan (8') du palier d'arbre, et il est prévu, sur le deuxième point (7) d'appui, un palier (9) d'arbre, qui est dirigé également parallèlement au plan (8') du palier d'arbre et qui peut être déplacé parallèlement au plan (8') du palier d'arbre.

4. Agencement de palier d'arbre suivant l'une des revendications précédentes, **caractérisé en ce que** le deuxième sous-élément (4) de machine peut être déplacé le long d'un guidage par rapport au premier sous-élément (3) de machine.

5. Agencement de palier d'arbre suivant l'une des revendications précédentes, **caractérisé en ce qu'**il est prévu des moyens d'orientation, pour orienter le deuxième sous-élément (4) de machine par rapport au premier sous-élément (3) de machine.

6. Agencement de palier d'arbre suivant l'une des revendications précédentes, **caractérisé en ce que** la partie (2) de machine est constituée en boîtier et des moyens d'étanchéité sont prévus entre le premier sous-élément (3) de machine et le deuxième sous-élément (4) de machine.

7. Agencement de palier d'arbre suivant l'une des revendications précédentes, **caractérisé en ce qu'**un joint (65) torique est disposé entre le premier sous-élément (3) de machine et le deuxième sous-élément (4) de machine.

8. Agencement de palier d'arbre suivant l'une des revendications précédentes, **caractérisé en ce qu'**il est prévu des moyens (70) de déplacement du deuxième sous-élément (4) de machine par rapport au premier sous-élément (3) de machine.

9. Agencement de palier d'arbre suivant l'une des revendications précédentes, **caractérisé en ce que** les moyens (70) de déplacement comprennent un excentrique.

10. Agencement de palier d'arbre suivant l'une des revendications précédentes, **caractérisé en ce que** les ouvertures (11, 12, 30 à 35, 50 à 55) sont sur un cercle.

11. Agencement de palier d'arbre suivant l'une des revendications précédentes, **caractérisé en ce que** l'arbre (5) est constitué en partie de transmission ou en a une et une deuxième partie (18) de transmission associée est montée dans la partie (2) de machine.
